# NOUVEAU FASCICULE DE BREVET EUROPEEN

(11) **EP 0 248 714 B2**
(45) Date de publication et mention de la décision concernant l'opposition: **14.12.1994**
(45) Mention de la délivrance du brevet: 08.08.1990
(21) Numéro de dépôt: 87401195.0
(22) Date de dépôt: 27.05.1987
(51) Int. Cl.: F16F 13/00

(54) **Perfectionnements apportés aux manchons de support anti-vibratoires hydrauliques**
Hülsen für hydraulische Antischwingungslager
Sleeves of hydraulic anti-vibration mounts

(30) Priorité: 03.06.1986 FR 8607974
(43) Date de publication de la demande: 09.12.1987
(73) Titulaire: HUTCHINSON, F-75008 Paris (FR)
(72) Inventeur: Jouade, Pierre, La Chapelle du Nover F-28200 Chateaudun (FR)
(74) Mandataire: Behaghel, Pierre

(56) Documents cités:
- EP-A- 0 009 120
- EP-A- 0 160 234
- EP-A- 0 172 700
- DE-A- 3 441 806
- FR-A- 2 394 715
- FR-A- 2 495 718
- FR-A- 2 551 161
- JP-A-60 175 836
- PATENT ABSTRACTS OF JAPAN, vol. 10, no. 187 (M-493)[2243], 2 juillet 1986; & JP-A-61 31 736 (KURASHIKI KAKO K.K.) 14-02-1986
- Idem
- PATENT ABSTRACTS OF JAPAN, vol. 9, no. 231 (M-414)[1954], 18 septembre 1985; & JP-A-60 88 242 (TOYOTA JIDOSHA K.K.) 18-05-1985
- Idem
- PATENT ABSTRACTS OF JAPAN, vol. 6, no. 26 (M-112)[904], 16 février 1982; & JP-A-56 143 830 (BRIDGESTONE TIRE K.K.) 09-11-1981
- PATENT ABSTRACTS OF JAPAN, vol. 10, no. 14 (M-447)[2071], 21 janvier 1986; & JP-A-60 175 836 (TOYOTA JIDOSHA K.K.) 10-09-1985
- PATENT ABSTRACTS OF JAPAN, vol. 9, no. 268 (M-424)[1991], 25 octobre 1985; & JP-A-60 113 836 (TOYOTA JIDOSHA K.K.) 20-06-1985

## Description

L'invention est relative aux manchons de support antivibratoires hydrauliques comprenant deux armatures rigides tubulaires s'entourant l'une l'autre et de préférence de révolution au moins en partie, coaxiales et concentriques au moins sous charge, armatures réunies entre elles par un corps en élastomère adhéré sur celles-ci et conformé de façon à former avec ces dernières au moins deux poches étanches diamétralement opposées communiquant entre elles par un canal étroit, l'ensemble desdites poches et'dudit canal étant rempli d'un liquide amortisseur.

De tels manchons sont destinés à être montés entre deux pièces rigides solidarisables respectivement avec les deux armatures et susceptibles de subir l'une par rapport à l'autre des oscillations orientées selon une direction diamétrale D par rapport à l'axe commun aux deux armatures, l'ensemble étant agencé de façon telle que, pour certaines au moins de ces oscillations, le liquide soit refoulé alternativement de l'une des poches vers l'autre et inversement à travers le canal étroit, ce qui crée dans ce liquide, pour certaines fréquences des oscillations, un phénomène de résonance propre à amortir la transmission de ces oscillations de'l'une des armatures à l'autre.

Les manchons du genre en question sont par exemple destinés à être interposés entre, d'une part, un châssis de véhicule et, d'autre part, le moteur à combustion interne ou le train avant ou arrière de ce véhicule.

L'invention concerne plus particulièrement, parmi les manchons de support ci-dessus, ceux dans lesquels la portion du corps en élastomère qui délimite l'une au moins des poches présente en section axiale la forme générale d'un V ouvert radialement vers l'extérieur, ainsi que décrit dans le brevet JP-A-61 31736: ces manchons se prêtent à des déformations élastiques relativement importantes se traduisant par des inclinaisons mutuelles relativement élevées des axes des deux armatures.

Dans les modes de réalisation actuellement connus de ces manchons, le canal étroit qui relie les deux poches est généralement constitué par un canal en arc de cercle s'étendant dans le plan transversal médian du manchon, le long de l'armature interne ou, plus rarement, le long de l'armature externe,

Ces modes de réalisation présentent l'inconvénient suivant: le canal étroit est relativement éloigné des faces axiales terminales du manchon, ce qui pose des problèmes pour le remplissage de ce manchon en liquide et pour l'établissement de l'étanchéité, ce remplissage devant être effectué avant la mise en place de l'armature externe autour du corps en élastomère.

De plus il n'est pas possible de modifier les dimensions du canal étroit, et donc les caractéristiques d'amortissement du manchon, après fabrication de celui-ci.

L'invention a pour but, surtout, d'écarter ces inconvénients.

A cet effet, un manchon de support du genre défini dans le préambule de la revendication 1 est caractérisé en ce que le canal est disposé au voisinage d'une extrémité axiale du corps en élastomère et est délimite en partie par une virole métallique définissant une gorge ouverte vers l'extérieur du manchon et pour le restant par un élément rigide.

Dans des modes de réalisation avantageux, on a recours en outre à l'une et/ou à l'autre des dispositions suivantes:
le canal est délimité d'une par par une virole métallique présentant une section en U disposée selon la direction de l'axe de ce manchon et à l'intérieur de l'armature tubulaire externe, à proximité de celle-ci, et d'autre part par une garniture annulaire rigide introduite axialement dans cette virole,
dans un manchon selon l'alinéa précédent, le fond de la virole communique avec l'une au moins des poches par une lumière allongée circonféren- tiellement et la longueur du canal peut être réglée par modification de la position angulaire de la garniture annulaire dans la virole,
une communication est prévue entre le canal et l'extérieur pour permettre le remplissage du manchon en liquide,
le manchon comprend deux canaux disposés respectivement au voisinage de ses deux extrémités axiales, symétriquement par rapport à son plan transversal médian,
dans un manchon selon l'alinéa précédent, l'un des deux canaux est garni d'un coussin élastiquement compressible constitué notamment par un matériau alévolaire à cellules fermées et mis en communication avec l'une au moins des deux poches,
les parois divergeant vers l'extérieur et constitutives du corps en élastomère sont adhérées sur deux faces tronconiques qui délimitent une nervure annulaire centrale profilée en V faisant partie de l'armature interne, chacune de ces deux faces tronconiques étant sensiblement normale aux génératrices de la paroi tronconique adhérée sur elle,
une cloison s'étendant selon le plan transversal médian du manchon prolonge radialement l'armature interne vers l'extérieur jusqu'à une petite distance de l'armature externe de façon à diviser la poche correspondante en deux compartiments communiquant entre eux par le canal délimité radialement entre cette cloison et ladite armature externe,
une bague cylindrique rigide est rapportée le long de la face intérieure de l'armature externe, entre deux bourrelets qui délimitent extérieurement le corps en élastomère,
le corps en élastomère est précontraint axialement lors de son montage à l'intérieur de l'armature externe,
le nombre des poches étanches est égal à quatre, diamétralement opposées deux à deux, et chacune de ces poches communique avec la poche diamétralement opposée par l'intermédiaire d'un canal,
l'une des poches est délimitée par l'armature tubulaire externe et par une membrane souple reliée de façon étanche à cette armature.

L'invention comprend, mises à part ces dispositions principales, certaines autres dispositions qui s'utilisent de préférence en même temps et dont il sera plus explicitement question ci-après.

Dans ce qui suit, l'on va décrire plusieurs modes de réalisation préférés de l'invention en se référant aux dessins ci-annexés d'une manière bien entendu non limitative.
Les figures 1 et 2, de ces dessins, montrent un manchon antivibratoire hydraulique établi selon l'invention, respectivement en coupe axiale selon 1-1, figure 2 et en coupe transversale à échelle plus petite selon II-II, figure 1.
Les figures 3 et 4 montrent une variante d'un tel manchon également conforme à l'invention, respectivement en coupe axiale à l'état libre selon III-III, figure 4 et en coupe transversale sous charge selon IV-IV figure 3.
Les figures 5 et 6 montrent une autre variante d'un tel manchon encore conforme à l'invention, respectivement en coupe axiale selon V-V, figure 6 et en coupe transversale simplifiée selon VI-VI, figure 5.

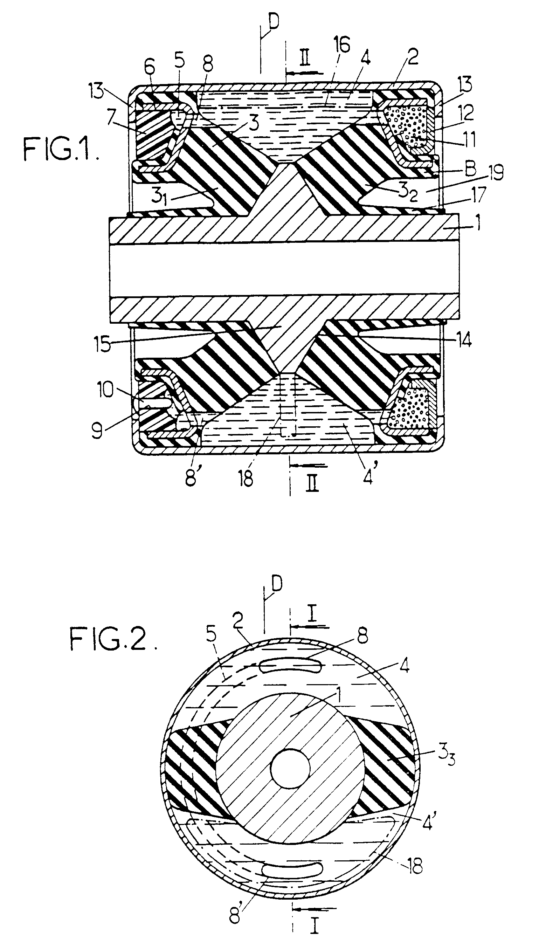

D'une façon connue en soi, le manchon illustré sur les figures 1 et 2 comprend:
une armature métallique interne tubulaire de révolution 1,
une armature métallique externe tubulaire de révolution 2 coaxiale à l'armature 1 au moins pour l'état monté et chargé du manchon et entourant cette armature 1,
et un corps en élastomère 3 reliant l'une à l'autre les deux armatures 1 et 2 en ménageant entre celles-ci deux poches étanches 4, 4' diamétralement opposées selon une direction D.

L'armature interne 1 est destinée à être solidarisée avec une broche (non représentée) qui la traverse jointivement alors que l'armature externe 2 est destinée à être solidarisée avec un palier (non représenté), cette broche et ce palier étant solidaires respectivement de deux éléments rigides entre lesquels on désire monter un support antivibratoire, éléments tels qu'un moteur de véhicule et que le châssis de ce véhicule.

Les deux poches 4 et 4' communiquent entre elles par un canal étroit 5.

Ces deux poches et le canal étroit sont replis d'un liquide L.

Dans le mode de réalisation des figures 1 et 2, la portion essentielle du corps 3 présente sous charge une forme de révolution avec une section axiale en X: deux gorges 19 ouvertes axialement vers l'extérieur du manchon sont alors disposées entre l'armature tubulaire interne 1 et les parois épaisses 31, 3₂ de forme générale conique correspondant à cet X.

Deux bras radiaux 3₃ diamétralement opposés complètent ces parois 31, 3₂ pour former avec elles le corps 3.

Lorsqu'une oscillation de fréquence relativement basse (par exemple de l'ordre de 10 à 50 Hz) et d'amplitude relativement grande (supérieure à 1 mm) est imposée selon la direction diamétrale D à l'une des deux armatures 1, 2 par rapport à l'autre, le liquide L est refoulé alternativement à ladite fréquence dans le canal 5 depuis l'une des poches 4, 4' à l'autre et inversement et les dimensions dudit canal, en particulier sa longueur et sa section, sont déterminées de façon telle que l'on observe un excellent amortissement de ladite oscillation pour une valeur donnée de ladite fréquence par création d'un effet de résonance dans la colonne de liquide alors présente dans le canal.

Ce canal s'étend encore d'une façon connue en soi selon un arc de cercle admettant pour axe celui du manchon, mais il est ici localisé, non plus dans la zone transversale médiane de ce manchon, mais à proximité de l'une des extrémités axiales du corps 3 en matériau élastomère et à proximité de l'armature tubulaire externe 2, c'est-à-dire axialement et radialement au niveau des extrémités des branches de l'X défini ci-dessus.

Dans le mode de réalisation des figures 1 et 2, le contour extérieur du corps 3 est délimité axialement et radialement par deux boudins annulaires et c'est dans l'un au moins de ces boudins qu'est logé le canal 5.

Ce canal pourrait être, au moins en partie, directement évidé dans le boudin concerné.

Dans la réalisation considérée, une virole métallique 6 présentant un profil en U ouvert axialement vers l'extérieur du manchon est disposée dans chaque boudin et l'une au moins des deux viroles 6 est obturée par une garniture annulaire 7 constituée notamment en une matière plastique rigide.

Le profil de la garniture 7 est tel que son introduction dans la virole 6 s'effectue à force et qu'à la fin de cette introduction le canal 5 soit réservé entre la garniture et la virole.

Le fond de la virole 6 ainsi que la masse élastomère qui recouvre ce fond sont évidés par deux lumières 8, 8' faisant communiquer le canal 5 avec respectivement les deux poches 4 et 4'.

Dans une réalisation intéressante, la section de chaque lumière 8, 8' est allongée circonférentielle- ment, comme visible sur la figure 2.

On peut alors régler la longueur du canal 5 par simple modification de la position angulaire de la garniture 7 dans la virole 6, la forme de cette garniture étant prévue en conséquence.

Le canal 5 disposé dans un boudin latéral du corps 3 peut être unique et s'étendre alors sur un arc généralement compris entre 90 et 2700, par exemple de l'ordre de 180°.

Il peut également être double, étant alors composé notamment de deux tronçons semi-circulaires symétrqiues l'un de l'autre par rapport à un plan axial passant par les milieux des deux lumières 8 et 8'.

On peut prévoir un tel canal 5, simple ou double, dans chacun des deux boudins latéraux du corps 3.

Du fait que le canal 5 se trouve à proximité d'une extrémité axiale du manchon, il peut être facilement mis en communication avec l'extérieur de ce manchon à travers un conduit très court 9 percé dans la garniture 7.

Ce conduit peut être utilisé pour remplir le manchon en liquide L.

Ledit conduit peut être unique, et dans ce cas le remplissage du manchon en liquide peut impliquer une phase préalable de mise sous vide du volume à remplir; mais il peut également être dédoublé en deux conduits du même genre suffisamment éloignés l'un de l'autre pour faciliter l'évacuation de l'air intérieur au manchon au cours du remplissage.

On voit en 10 un bouchon obturant le conduit 9 en fin de remplissage.

Pour rendre le manchon capable d'amortir non seulement des oscillations de fréquence relativement basse et d'amplitude relativement grande, mais aussi certaines vibrations de fréquence plus élevée et d'amplitude plus petite, on loge avantageusement dans l'une des deux viroles 6 décrites ci-dessus un coussin élastiquement compressible mis en communication permanente avec l'une au moins des deux poches à travers des lumières du genre de celles désignées ci-dessus par les références 8 et 8'.

Un tel coussin peut être constitué par un corps alvéolaire à cellules fermées ou encore par une chambre à air délimitée par un tuyau en une matière élastique étanche et contenant un gaz, tel que de l'air, légèrement comprimé.

Vu la déformabilité du coussin 11, il convient de compléter à l'aide d'une rondelle rigide 12 en L une cage annulaire contenant ce coussin.

Des rabats transversaux 13 peuvent être prévus aux extrémités axiales de l'armature externe 2 pour maintenir en place aussi bien les garnitures 7 que les rondelles 12.

Le manchon qui vient d'être décrit est essentiellement destiné à encaisser et amortir des sollicitations alternatives exercées entre les deux armatures 1 et 2 selon la direction diamétrale D.

Il peut être intéressant de l'agencer en outre de façon telle qu'il puisse encaisser, éventuellement avec amortissement, des sollicitations exercées entre ces deux armatures selon la direction axiale du manchon ou selon une direction peu inclinée sur cette dernière.

La constitution, signalée ci-dessus, du corps en élastomère 3 par deux parois tronconiques épaisses 3i, 3₂ est avantageuse à cet effet.

Ces deux parois tronconiques sont juxtaposées au niveau de leurs petites bases ou, plus précisément, ces petites bases sont adhérées respectivement sur deux plages tronconiques 14 qui délimitent une nervure annulaire épaisse 15 faisant saillie extérieurement sur l'armature interne 1, chaque plage 14 étant sensiblement normale aux génératrices de la paroi tronconique qui est adhérée sur elle.

La présence de la nervure épaisse 15 est rendue possible par le fait que le canal étroit n'est plus prévu ici autour de la région centrale de l'armature interne 1.

En jouant sur l'obliquité des plages 14, on peut modifier à volonté la résistance du manchon aux sollicitations axiales et sa résistance aux sollicitations radiales, la première étant d'autant plus élevée, et la second d'autant plus faible, que l'inclinaison des plages 14 sur la direction axiale est plus forte.

Pour accroître la résistance aux sollicitations axiales, il peut être avantageux de rapporter le long de la face interne de l'armature externe 2 une bague cylindrique rigide s'étendant axialement et jointivement entre les deux boudins ou bourrelets du corps 3: une telle bague a été représentée en traits mixtes en 16.

Dans un but analogue d'accroissement de la résistance du manchon à des sollicitations aussi bien axiales que radiales, on exerce sur le corps 3 une précontrainte axiale, notamment lors du montage de ce corps à l'intérieur de l'armature externe 2.

Du fait de l'obliquité des parois 3, et 3₂, cette précontrainte axiale s'accompagne automatiquement d'une certaine précontrainte radiale.

La longueur de la bague 16 est avantageusement choisie de façon à régler à la valeur désirée l'importance de ladite précontrainte, les bourrelets en élastomère venant buter en fin de montage contre les tranches axiales de cette bague.

Comme indiqué plus haut, les boudins dans lesquels sont logés les canaux 5 ou coussins 11 sont disposés radialement autour et en regard des plages extérieures terminales de l'armature interne 1, étant séparés de ces plages par des gorges 19.

La petite distance radiale qui sépare ces boudins de ces plages peut être annulée lors de l'exercice de fortes sollicitations radiales entre les deux armatures annulaires 1 et 2: lesdits boudins viennent alors en butée contre lesdites plages-qui sont avantageusement revêtues d'une couche d'élastomère 17 venue de moulage avec le corps 3-et l'on dispose ainsi d'un moyen très efficace pour limiter les déformations radiales du manchon.

Pour rendre le manchon ci-dessus décrit apte à amortir par un effet d'étranglement de liquide certaines oscillations relatives exercées axialement entre les deux armatures 1 et 2, on peut décomposer l'une au moins des deux poches 4 et 4' en deux compartiments communiquant l'un avec l'autre par un canal étroit.

Il suffit à cet effet de rapporter sur la nervure 15 une cloison rigide en forme de secteur circulaire s'étendant radialement à partir de ladite nervure jusqu'à une petite distance de l'armature externe 2: une telle cloison a été représentée en traits mixtes en 18 sur les figures 1 et 2.

Lorsqu'une oscillation axiale est exercée sur l'armature 1 par rapport à l'armature 2 ou inversement, le liquide contenu dans l'un des deux compartiments ainsi délimités est refoulé alternativement de ce compartiment dans l'autre à travers le canal étroit délimité radialement entre la cloison 18 et l'armature externe 2 et les dimensions de ce canal sont choisies de façon telle que l'on observe alors un amortissement maximum pour une valeur désirée donnée de la fréquence desdites oscillations.

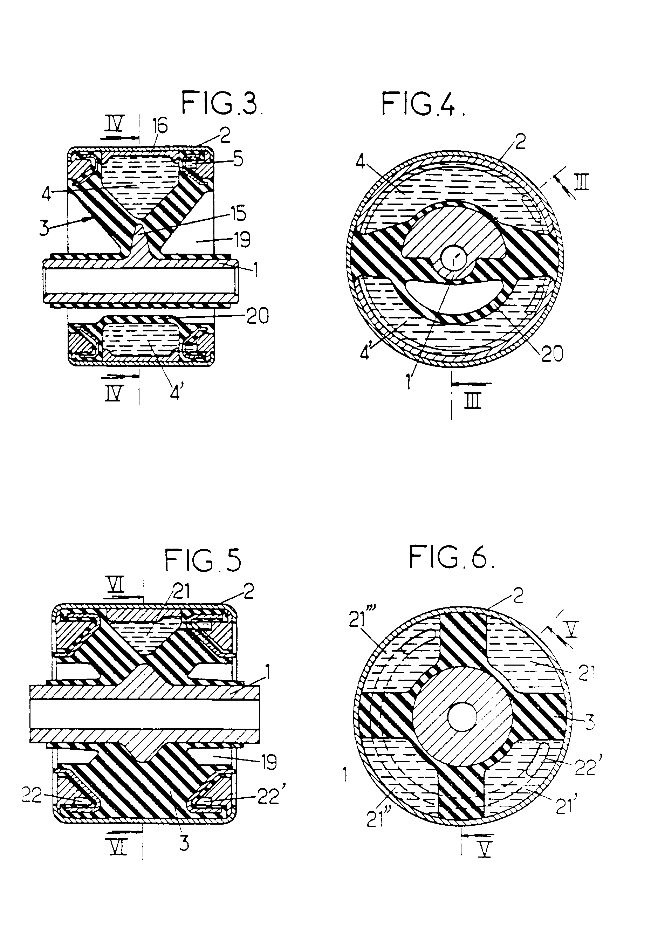

Le mode de réalisation schématisé sur les figures 3 et 4 diffère essentiellement du précédent par la constitution de la poche 4'.

Ici la portion du corps en élastomère 3 qui délimite en partie cette poche 4' n'est plus constituée par des tronçons de paroi tronconique formant un X en section axiale, mais par une membrane flexible mince 20. Cette membrane se présente ici sous la forme d'un bandeau incurvé en demi-cercle et légèrement bombé vers l'axe. Ce bandeau présente deux bords semi-circulaires reliés de façon étanche a l'armature externe 2 le long des viroles 6 et ses deux extrémités selon la direction circonférentielle sont raccordées aux bras 3₃.

Dans cette construction, la nervure 15 n'est pas prévue du côté de la membrane 20.

Dans ces conditions, seule la poche 4 est délimitée par une portion du corps en élastomère 3 présentant une section axiale en V ouverte radialement vers l'extérieur et s'étendant autour de l'axe du manchon selon seulement une moitié de circonférence.

Cette construction dissymétrique présente l'avantage d'une grande souplesse radiale.

Enfin le mode de réalisation schématisé sur les figures 5 et 6 diffère de celui illustré sur les figures 1 et 2 en ce qu'il comporte non plus seulement deux poches étanches 4 et 4', mais quatre telles poches 21, 21', 21", 21 "' diamétralement opposées deux à deux.

Chacune de ces poches set relée à la poche diamétralement opposée par un canal étroit 22 ou 22'.

Une telle construction présente l'avantage d'assurer un excellent amortissement d'oscillations exercées sur le support selon deux directions radiales perpendiculaires entre elles.

En suite de quoi, et quel que soit le mode de réalisation adopté, on dispose finalement d'un manchon de support antivibratoire hydraulique dont la constitution, le fonctionnement et les avantages résultant suffisamment de ce qui précède.

## Revendications

1. Manchon de support comprenant deux armatures rigides tubulaires (1,2) s'entourant mutuellement, réunies entre elles par un corps en élastomère (3) adhéré sur elles et conformé de façon à former entre les deux armatures au moins deux poches étanches (4,4') diamétralement opposées et communiquant entre elles par un canal étroit (5) s'étendant selon un arc de cercle transversal admettant pour axe l'axe de l'armature externe et disposé radialement au voisinage de l'armature tubulaire externe (2), à l'intérieur de celle-ci, la portion du corps en élastomère qui délimite l'une au moins de ces poches présentant en section axiale la forme générale d'un V ouvert radialement vers l'extérieur, et l'ensemble des poches et du canal étant rempli par un liquide amortisseur, caractérisé en ce que le canal (5) est disposé au voisinage d'une extrémité axiale du corps en élastomère (3) et est délimité en partie par une virole métallique (6) définissant une gorge ouverte vers l'extérieur du manchon et pour le restant par un élément rigide.

2. Manchon de support selon l'une quelconque des précédentes revendications, caractérisé en ce que la virole (6) est ouverte selon la direction de l'axe du manchon.

3. Manchon de support selon l'une quelconque des précédentes revendications, caractérisé en ce que l'élément rigide est une garniture annulaire (7) introduite dans la virole (6).

4. Manchon de support selon les revendications 2 et 3, caractérisé en ce que le fond de la virole (6) communique avec l'une au moins des poches (4,4') par une lumière (8,8') allongée cir- conférentiellement et en ce que la longueur du canal peut être réglée par modification de la position angulaire de la garniture annulaire (7) dans la virole.

5. Manchon de support selon l'une quelconque des précédentes revendications, caractérisé en ce qu'une communication (9) est prévue entre le canal (5) et l'extérieur pour permettre le remplissage du manchon en liquide.

6. Manchon de support selon l'une quelconque des précédentes revendications, caractérisé en ce qu'il comprend deux canaux disposés respectivement au voisinage des deux extrémités axiales du manchon, symétriquement par rapport à son plan transversal médian.

7. Manchon de support selon la revendication 6, caractérisé en ce que l'un des deux canaux est garni d'un coussin (11) élastiquement compressible constitué notamment par un matériau alvéolaire à cellules fermées et mis en communication avec l'une au moins des deux poches (4,4').

8. Manchon de support selon l'une quelconque des précédentes revendications, caractérisé en ce que les parois (3,,32) divergeant vers l'extérieur et constitutives du corps en élastomère sont adhérées sur deux faces tronconiques (14) qui délimitent une nervure annulaire centrale (15) profilée en V faisant partie de l'armature interne (1), chacune de ces deux faces tronconiques étant sensiblement normale aux génératrices de la paroi tronconique adhérée sur elle.

9. Manchon de support selon l'une quelconque des précédentes revendications, caractérisé en ce qu'une cloison (18) s'étendant selon le plan transversal médian du manchon prolonge radialement l'armature interne (1) vers l'extérieur jusqu'à une petite distance de l'armature externe (2) de façon à diviser la poche correspondante (4 ou 4') en deux compartiments communiquant entre eux par le canal délimité radialement entre cette cloison et ladite armature externe.

10. Manchon de support selon l'une quelconque des précédentes revendications, caractérisé en ce qu'une bague cylindrique rigide (16) est rapportée le long de la face intérieure de l'armature externe (2), entre deux bourrelets qui délimitent extérieurement le corps en élastomère (3).

11. Manchon de support selon l'une quelconque des précédentes revendications, caractérisé en ce que le corps en élastomère est précontraint axialement lors de son montage à l'intérieur de l'armature externe.

12. Manchon de support selon l'une quelconque des précédentes revendications, caractérisé en ce que le nombre de ses poches étanches (21,21',21 ",21 "') est égal à quatre, diamétralement opposées deux à deux, et en ce que chacune de ces poches communique avec la poche diamétralement opposée par l'intermédiaire d'un canal (22,22').

13. Manchon de support selon l'une quelconque des précédentes revendications, caractérisé en ce que l'une des poches est délimitée par l'armature tubulaire externe (2) et par une membrane souple (20) reliée de façon étanche à cette armature.

## Claims

1. Support sleeve having two rigid tubular frames (1,2) surrounding each other mutually, joined together by an elastomer body (3) adhering thereto and shaped so as to form between said two frames at least two diametrically opposite sealed pockets (4,4') communicating together through a narrow channel (5) which extends along a transverse arc of a circle having as axis the axis of the external frame and which is situated radially near the external tubular frame (2), inside said frame, the portion of the elastomer body which defines one at least of these pockets having in axial section the general form of a radially outwardly open V, and the assembly of the pockets and of the channel being filled with a damping liquid, characterized in that the channel (5) is situated near an axial end of the elastomer body (3) and is defined partly by a metal shroud (6) having the form of a groove opening outwardly of the sleeve and for the remaining by a rigid element.

2. Support sleeve according to claim 1, characterized in that the shroud opens in the direction of the axis of the sleeve.

3. Support sleeve according to any one of the preceding claims, characterized in that the rigid element is an annular packing (7) introduced into the shroud.

4. Support sleeve according to claims 2 and 3, characterized in that the bottom of the shroud (6) communicates with one at least of the pockets (4,4') through a circumferentially elongate aperture (8,8') and in that the length of the channel may be adjusted by modifying the angular position of the annular packing (7) in the shroud.

5. Support sleeve according to any one of the preceding claims, characterized in that a communication (9) is provided between the channel (5) and the outside far filling the sleeve with, liquid.

6. Support sleeve according to any one of the preceding claims, characterized in that it includes two channels disposed respectively near the two axial ends of the sleeve, symmetrically with respect to its median transverse plane.

7. Support sleeve according to claim 6. characterized in that one of the two channels is provided with a resiliently compressible cushion (11) formed more particularly by a cellular material with closed cells and placed in communication with one at least of the two pockets (4,4').

8. Support sleeve according to any one of the preceding claims, characterized in that the outwardly diverging walls (31,32) forming the elastomer body are adhered to two truncated cone shaped faces (14) which define a central annular rib (15) shaped as a V and forming part of the internal frame (1), each of these two truncated cone shaped faces being substantially normal to the generatrices of the truncated cone shaped wall adhering thereto.

9. Support sleeve according to any one of the preceding claims, characterized in that a dividing wall (18) extending along the median transverse plane of the sleeve extends the internal frame (1) radially outwardly up to a small distance from the external frame (2) so as to divide the corresponding pocket (4 or 4') into two compartments communicating together through the channel defined radially between this dividing wall and said external frame.

10. Support sleeve according to any one of the preceding claims, characterized in that a cylindrical rigid ring (16) is provided along the inner face of the external frame (2), between two pads which define the elastomer body (3) outwardly.

11. Support sleeve according to any one of the preceding claims, characterized in that the elastomer body is axially prestressed during mounting thereof inside the external frame.

12. Support sleeve according to any one of the preceding claims, characterized in that the number of its sealed pockets (21, 21', 21", 21 "') is equal to four, disposed diametrically in pairs, and in that each of these pockets communicates with the diametrically opposite pocket through a channel (22,22').

13. Support sleeve according to any one of the preceding claims, characterized in that one of the pockets is defined by the external tubular frame (2) and by a flexible membrane (20) sealingly connected to this frame.

## Patentansprüche

1. Hülse für hydraulische Antischwingungslager, die aus zwei starren rohrförmigen Armaturen (1, 2) besteht, von denen die eine die andere umgibt und die miteinander durch einen Körper (3) aus elastomeren Material verbunden sind, der an den Armaturen angebracht und so ausgebildet ist, daß zwischen den beiden Armaturen wenigstens zwei dichte, sich diametral gegenüberliegende Taschen (4, 4') gebildet werden, die untereinander über einen engen Kanal (5) in Verbindung stehen, der sich längs eines quer verlaufenden Kreisbogens erstreckt, dessen Achse mit der Achse der äußeren Armatur zusammenfällt, wobei der Kanal in radialer Richtung in der Nähe der äußeren rohrförmigen Armatur (2) im Inneren derselben verläuft, der Abschnitt des Körpers aus elastomerem Material, der wenigstens eine der Taschen begrenzt, einen axialen Querschnitt in Form eines sich radial nach außen öffnenden V hat und die Taschen und der Kanal mit einer Dämpfungsflüssigkeit gefüllt sind, dadurch gekennzeichnet, daß der Kanal (5) in der Nähe eines axialen Endes des Körpers (3) aus elastomerem Material angeordnet ist und teilweise durch einen metallischen Ring (6), der eine Kehle bestimmt, die sich zum Äußere der Hülse öffnet und für den Rest durch ein starres Element begrenzt wird.

2. Hülse nach Anspruch 1, dadurch gekennzeichnet, daß der Ring (6) sich in der Richtung der Achse der Hülse öffnet.

3. Hülse nach einem der vorhergehenden Ansprüche, dadurch gekennzeichnet, daß das starre Element eine ringförmige Einlage (7) ist, die in den Ring eingeführt ist.

4. Hülse nach Ansprüche 2 und 3, dadurch genkennzeichnet, daß der Boden des Ringes (6) mit wenigstens einer der Taschen (4, 4') über eine in Umfangsrichtung längliche Öffnung (8, 8') in Verbindung steht und daß die Länge des Kanals durch Veränderung der Winkelstellung der ringförmigen Einlage (7) in dem Ring regulierbar ist.

5. Hülse nach einem der vorhergehenden Ansprüche, dadurch gekennzeichnet, daß zwischen dem Kanal (5) und der Außenseite der Hülse eine Verbindung (9) zum Füllen der Hülse mit Flüssigkeit vorgesehen ist.

6. Hülse nach einem der vorhergehenden Ansprüche, dadurch gekennzeichnet, daß sie zwei Kanäle enthält, die jeweils in der Nähe der beiden axialen Enden der Hülse vorgesehen und symmetrisch in bezug auf die mittlere Querebene der Hülse angeordnet sind.

7. Hülse nach Anspruch 6, dadurch gekennzeichnet, daß einer der beiden Kanäle mit einem elastisch zusammendrückbaren Polster (11) versehen ist, das vorzugsweise aus einem porösem Material mit geschlossenen Poren besteht und mit wenigstens einer der beiden Taschen (4, 4') in Verbindung steht.

8. Hülse nach einem der vorhergehenden Ansprüche, dadurch gekennzeichnet, daß die nach außen divergierenden Wandungen (3₁, 3₂), die den Körper aus elastomerem Material bilden, an zwei konisch verlaufenden Flächen (14) befestigt sind, die eine ringförmige mittlere Rippe (15) begrenzen, die V-förmig ausgebildet ist und einen Teil der inneren Armatur (1) bildet, wobei die beiden konischen Flächen im wesentlichen senkrecht zu den Erzeugenden der konischen Wandung verlaufen, die an ihnen angebracht ist.

9. Hülse nach einem der vorhergehenden Ansprüche, dadurch gekennzeichnet, daß sich in der mittleren Querebene der Hülse eine Trennwand (18) erstreckt, die die innere Armatur (1) in radialer Richtung nach außen zu bis auf einen kleinen Abstand von der äußeren Armatur (2) verlängert, so daß sie die entsprechende Tasche (4 oder 4') in zwei Räume unterteilt, die untereinander durch den Kanal in Verbindung stehen, der durch den radialen Zwischenraum zwischen der Trennwand und der äußeren Armatur gebildet wird.

10. Hülse nach einem der vorhergehenden Ansprüche, dadurch gekennzeichnet, daß längs der inneren Oberfläche der äußeren Armatur (2) zwischen zwei Wülsten, die den Körper (3) aus elastomerem Material außen begrenzen, ein starrer zylindrischer Ring (16) eingesetzt ist.

11. Hülse nach einem der vorhergehenden Ansprüche, dadurch gekennzeichnet, daß der Körper aus elastomerem Material in axialer Richtung mit einer Vorspannung im Inneren der äußeren Armatur montiert wird.

12. Hülse nach einem der vorhergehenden Ansprüche, dadurch gekennzeichnet, daß sie vier dichte Taschen (21, 21', 21", 21 "') enthält, von denen sich jeweils zwei diametral gegenüberliegen und daß jede Tasche über einen Kanal (22, 22') mit der ihr diametral gegenüberliegenden Tasche in Verbindung steht.

13. Hülse nach einem der vorhergehenden Ansprüche, dadurch gekennzeichnet, daß eine der Taschen durch die rohrförmige äußere Armatur (2) und durch eine nachgiebige Membran (20) begrenzt wird, die dicht mit dieser Armatur verbunden ist.
